# EUROPEAN PATENT SPECIFICATION

(11) **EP 1 279 334 B1**
(45) Date of publication and mention of the grant of the patent: **11.08.2004**
(21) Application number: 02077969.0
(22) Date of filing: 22.07.2002
(51) Int. Cl.: A01N 25/00, A01N 43/16

(54) **Combined bait with a rat-poisoning action**
Kombinierter Köder mit Ratten vergiftender Wirkung
Appât combiné avec de l'effet toxique contre les rats

(30) Priority: 24.07.2001 IT MI20011587
(43) Date of publication of application: 29.01.2003
(73) Proprietor: Zapi Industrie Chimiche S.p.A., 35026 Conselve (Padova) (IT)
(72) Inventor: Zambotto, Pietro, 35020 Cartura (Padova) (IT); Zambotto, Pierpaolo, 35020 Cartura (Padova) (IT); Tagliaro, Massimo, 35020 Albignasego (Padova) (IT)
(74) Representative: Coppo, Alessandro

(56) References cited:
- EP-A- 0 115 664
- EP-A- 0 120 582
- DE-A- 2 226 845
- US-A- 3 867 546

## Description

The present invention relates to a combined bait with a rat-poisoning action.

More specifically, the present invention relates to a composition with a rat-poisoning action having particularly appetizing baiting components for the commonest murine species.

It is known that in the last decades the number of murine population in the world has almost quadrupled.

The considerable environmental adaptability of the murine species, together with increasing provision sources made available by human beings through the creation of dumps, sewer systems and waste deposits, has allowed mice and rats to attain a wide variety of habitats.

It is also known that the parasitic life of rats and mice has a polluting action on the environment with considerable damage to the detriment of the food resources of human beings.

Furthermore, the presence of mice and rats in urban areas is often the cause of the erosion of electric cables, water and gas pipes and manufactured articles in general. In addition, their presence near farms not only represents a hygienic risk but is also a cause of stress for the animals with consequent negative repercussions on the production performances.

In view of this situation various systems for fighting against rats and mice have been developed over the years.

Some of these systems comprise the use of mechanical means such as spring traps, glue traps or the use of electronic devices such as sound dissuaders, others include the use of chemical disinfestation means.

In the last few years there has been a rapid evolution and a considerable demand on the part of the market mainly for chemical means which can be used in domestic environments for fighting against mice and rats.

Among chemical systems, rat-poisoning baits are the commonest category of disinfestation products. These generally incorporate a poison and components with a phagocytative baiting action, in their formulations.

The higher the baiting and appetizing effect of the bait, the greater is the poisoning effect determined.

In order to increase the attractiveness and palatability of the bait, aromas, vegetable oils, fruit, fish and sugar are therefore used. The bait also incorporates preserving substances, dyes and bittering substances.

Dyes give a colouring which allows the bait to be distinguished from food suitable for human nourishment whereas bittering substances are additives which give the bait an unpleasant taste noticeable only by the human palate and suitable for preventing the accidental swallowing of high doses of rodenticide, mainly on the part of children.

Various types of preparations with a poisoning action are currently available on the market.

Among these pellets can be mentioned, which, analogously to the food for zootechnical use, contain poison mixed in with pulverized cereals and thickening substances, creating a high diffusion of the poison inside the preparation.

Pellets with a rat-poisoning action however have the disadvantage of having a lower palatability for rodents with respect to cereal-based baits.

Paraffinates are rat-poisoning baits whose active principles and other ingredients are mixed with paraffin. These baits, mainly used in environments with a high degree of humidity, are generally produced in blocks which allow them to be fixed inside poisoning stations and limit their transporting outside the station.

This type of bait however has the disadvantage of having a low palatability for rodents.

Other types of baits currently used are track or contact powder formulations, powdery substances conceived for being deposited along the habitual tracks of rodents or blown into their holes. When the rodent comes into contact with the powder, it tries to clean itself using its tongue and consequently swallows the poison.

Although powders are an extremely efficient means for controlling rodents, this disinfestation system nowadays has a limited application due to the high risk of environmental contamination which their use involves.

Another type of poisoning bait currently used consists of rat-poisoning preparations in gel form. Although these formulations have a high safety use as they are not easily transferred from the rodent, they have the disadvantage of having to be applied by means of a suitable gun.

The use of cereals as a valid baiting system for rodents is also known. The use of whole cereals however is not recommended as the tegument covering the seed prevents its absorption with the poisonous substance and consequently the rodent, having discarded the external tegument, eats the seed without swallowing the poisonous active principle.

These cereal-based baits are generally sold in the form of sachets made of cellulose material in order to favour the optimum preservation of the preparation, simple substitution of the bait and easy detection of the presence of rodents following the breakage of the sachet.

Rat-poisoning preparations based on cereals are not without their disadvantages however, such as limited uniformity in the distribution of the poison in the component of the bait and the possibility of creating infestations on the part of insects.

Furthermore, as rodents tend to move cereal grains and accumulate them in areas which can even be far from the poisoning station, there can be serious risks of contamination when operating in the presence of foodstuffs.

It is also known from DE 2226845A the use as a bait against voles of a poisonous paste spread on cut fruit tree branches.

Baits in the form of a paste, also called fresh baits or tidbits, have recently been introduced onto the market. These baits consist of a paste of a floury consistency, mixed with animal and vegetable fats to which antioxidants are added to prevent them from becoming rancid.

Although these baits have a reasonable palatability for rodents, they have the disadvantage of transuding excessive quantities of oil from the packaging sachet, in particular as a result of exposure to high temperatures, which are reached inside the poisoning stations in the summer months.

Furthermore, various cases of low bait consumptions have been observed, probably due to the absence of a solid component, in the fresh bait, suitable for being gnawed by the rodent.

The necessity is therefore felt for new types of bait with a rat-poisoning action which are palatable for the commonest infesting murine species.

One of the objectives of the present invention consists in providing a bait with a rat-poisoning action which is particularly palatable for most infesting murine species, also in the presence of competitive food sources.

Another objective consists in providing a bait with a high rat-poisoning action which is capable of alluring the highest possible number of infesting rodents and whose use has low risks of environmental contamination.

The last but not least important objective consists in producing a bait with a high rat-poisoning action whose domestic use does not require the presence of qualified persons for recognizing the type of infestation underway.

In view of the above objectives, according to a first aspect of the present invention, a combined bait is provided with a rat-poisoning action comprising an active principle with a rodenticidal action and a baiting composition for murine species, wherein said baiting composition comprises:
- a component in the form of an appetizing paste for rodents associated with
- a component in solid form suitable for being gnawed by a rodent.

In the bait of the present invention, the baiting composition combines the highly appetizing characteristics of paste preparations with the baiting characteristics of the solid formulations associated with the presence of a solid structure which is suitable for being gnawed.

It has been observed that the combination, in a single rat-poisoning preparation, of specific palatability and gnawing characteristics has a synergic baiting effect on a wide variety of murine species.

In the bait of the invention, the baiting component in the form of a paste, advantageously comprises flour of a vegetable and/or animal origin and pulverized products which are particularly appetizing for the commonest murine species.

The paste, which has a floury consistency, has highly appetizing organoleptic characteristics for rodents, especially in situations where only dry food is available. Furthermore, the similarity of the composition to substances present in the environment does not create any suspicion or aversion for this bait component.

The presence of fatty substances and oils gives the paste a creamy appearance and allows the bait to be preserved for prolonged periods also under critical environmental conditions, characterized by a high percentage of humidity and high temperatures.

The baiting properties of the bait of the invention are further increased by the presence of the baiting component in solid form which can be gnawed by a rodent. This term comprises cereals, fruit, vegetables and solid flour aggregates in all forms suitable for being gnawed by a rodent. It has also been observed that the solid baiting component in the bait has a micro-sponge function, absorbing the fats and oils present, thus limiting the transudation of the fatty phase.

The fruit or vegetables which can be used in the solid baiting component are advantageously in small pieces whose consistency and dimensions allow them to be gnawed by rodents.

Particularly suitable fruit consists of dried apples, dried pears, dried figs and their mixtures and any other type of fruit considered appropriate.

Suitable vegetables include carrots, dried tomatoes, beans, artichokes and their mixtures and any other type of vegetable considered appropriate.

According to a preferred embodiment of the invention, in the baiting composition there are whole, hulled, puffed or broken cereals. As an example, wheat, barley, maize, rice, sorghum, oats and their mixtures and any other cereal considered appropriate, can be used.

The bait of the invention can also incorporate one or more inert components in solid form which are suitable for being gnawed by rodents, such as pieces of wood, cork, sawdust, plastic, etc.

The bait of the invention also advantageously comprises other substances which help to increase the palatability, the preservation duration, safety of use, such as aromatizers, additives, preservatives, softeners and bittering substances.

The presence in the bait of the highly appetizing baiting composition for the greatest possible number of rodent species allows the active principle to be swallowed in such quantities as to exert a rodenticidal action.

The active principles which can be used within the scope of the invention can be subdivided into two categories: acute rodenticides or with a single dosage and chronic rodenticides or with a multiple dosage.

In both cases, the rodenticide is incorporated in the bait in such a quantity as to have a lethal effect on the rodent after being swallowed.

Acute rodenticides which can be used comprise natural poisons such as scilliroside, strychnine and synthetic poisons among which crimidine, sodium fluoroacetate, fluoroacetamide, zinc phosphide, norbormide, thallium sulfate, antu, α-chlorohydrin and their mixtures. Their use is restricted to emergency situations, when the extermination of the murine population must be achieved in the shortest possible time.

Within the context of the present invention, the incorporation of active principles with an anti-coagulating action is preferred. Once these substances have been introduced into the organism, they cause the interruption of the vitamin K cycle, causing a blockage of the blood coagulation process. Their use also allows a high safety margin as the quantity of bait necessary for creating toxic effects is such that lethal intoxication following accidental swallowing on the part of adults, children or domestic animals, is highly improbable.

Anti-coagulants which can be used within the scope of the invention can be with multiple doses such as warfarin, coumacloro, coumatetralyl, coumafuril, difacinone, clorofacinone and their mixtures, or with single doses such as bromadiolone, difenacoum, brodifacoum difethialone, flocoumafen and their mixtures. The active principle with an anti-coagulating action is preferably incorporated into the bait in a quantity ranging from 0.001% to 0.01% by weight.

According to an embodiment, the baiting component in paste form is present in a quantity ranging from 40% to 80% by weight and the baiting component in solid form is present in a quantity ranging from 5% to 30% by weight.

According to another aspect of the present invention the use of a bait is provided, comprising an active principle with a rodenticidal action and a baiting composition comprising a component in the form of an appetizing paste for rodents and a component in solid form suitable for being gnawed by a rodent, such as a mouse- or rat-poisoning agent.

The rodenticidal preparation is advantageously positioned in places frequented by rodents, care being taken to renew the bait before it is completely eaten up, in a ratio of 10-20 g per m² of surface to be protected. During the application of the bait, it is important to avoid contact with bare hands as rodents become cautious when they sense human odours.

The bait of the invention is suitable for domestic, civil and industrial use and is appropriate for rat extermination on both a reduced and wide scale.

The use of the bait of the invention has proved to be particularly effective in the fight against murine species selected from *Rattus norvegicus, Rattus rattus, Mus musculus, Apodemus sylvaticus, etc.*

According to another aspect of the invention, a method is provided for producing a rodenticidal bait comprising an initial phase in which part of the rodenticidal active principle is previously diluted in a fluid carrier such as glycol and then mixed with the solid component of the bait, preferably inside a pasting machine with plunging arms. It is then left to rest for a period necessary for allowing the active principle to be absorbed in the solid component. The powdery components are subsequently added under continuous mixing together with the remaining part of the active principle to allow the baiting components to be uniformly amalgamated for a time conveniently ranging from 45 to 60 minutes. The bait is then packaged using single-dose sachets made of filter paper.

The following examples are provided for purely illustrative purposes of the present invention as defined by the enclosed claims.

### EXAMPLE 1

| Anti-coagulating active principle | |
|---|---|
| Brodifacoum | 0.005% |
| Vegetable and animal flour | 57.825% |
| Granular carrot | 5.00% |
| Hulled whole oats | 5.00% |
| Wheat, barley, puffed oats | 5.00% |
| Propylene glycol | 0.10% |
| Animal and vegetable fats | 20.00% |
| Aromas | 0.05% |
| Refined sugar | 5.00% |
| Dyes | 0.02% |
| Preservatives (methyl and propyl p-oxy benzoate) | 2.00% |

### EXAMPLE 2

| Anti-coagulating active principle | |
|---|---|
| Flocoumafen | 0.005% |
| Animal flour | 60% |
| Granular dried apple | 5.00% |
| Hulled whole oats | 5.00% |
| Wheat, barely, puffed oats | 5.00% |
| Vegetable oils and fats | 18.00% |
| Preservative (methyl p-oxy benzoate) | 1.90% |
| Refined sugar | 5.00% |
| Aromas | 0.003% |
| Dyes | 0.01% |
| Propylene glycol | 0.082% |

### EXAMPLE 3

Experimental palatability tests were carried out comparing the bait of example 1 with a rat-poisoning bait in paste-form of the known art.

The tests were carried out in four different positions (1-4) in each of which the bait of the invention was coupled with the bait in paste-form.

Position 1 was arranged along a waterway, the favourite haunt of the species *Rattus norvegicus;* position 2 was housed inside a stable infested by *Rattus norvegicus;* position 3 was housed close to a bread-shop infested by mice of the species *mus musculus;* position 4 was arranged in a barn of a farmhouse infested by rats of the species *Rattus rattus.*

For each position the consumption of bait after 48 hours was noted and evaluated.

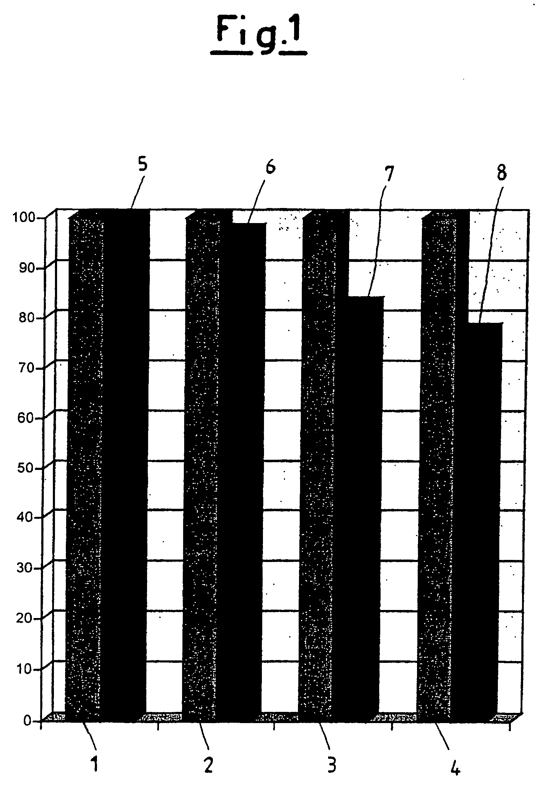

The results observed are summarized in the table indicated in Figure 1 enclosed, in which the reference numbers 1-4 specify in columns the weight percentages (100% in the 4 cases) of bait of the invention consumed in the 4 stations and reference numbers 5-8 represent the weight percentages (100%, 97.2%, 82.6%, 77.4% respectively) of bait in paste-form consumed by the rodents within the same stations.

From the results illustrated, it can be seen that the bait of the invention has been entirely consumed in all four positions, confirming the high palatability of the baiting composition of the invention.

The paste formulate of the known type, on the contrary, in three positions out of four, has not been entirely consumed by the rodents, demonstrating a reduced palatability for the rodenticidal paste on the part of the commonest infesting murine species.

## Claims

1. A combined bait with a rat-poisoning action comprising an active principle with a rodenticidal action and a baiting composition, **characterized in that** said baiting composition comprises a component in paste form palatable to rodents comprising flour of a vegetable and/or animal origin associated with a component in solid form suitable for being gnawed by a rodent.

2. The bait according to claim 1, **characterized in that** said baiting component in solid form is selected from the group comprising cereals, fruit, vegetables, flour aggregates, in forms suitable for being gnawed by a rodent.

3. The bait according to claim 2, **characterized in that** said fruit or vegetables are in the form of pieces suitable for being gnawed by rodents.

4. The bait according to claim 2 or 3, **characterized in that** said fruit is selected from the group comprising dried apples, dried pears, dried figs and their mixtures.

5. The bait according to claim 2 or 3, **characterized in that** said vegetables is selected from the group comprising carrots, dried tomatoes, beans, artichokes and their mixtures.

6. The bait according to claim 2, **characterized in that** said cereals are selected from the group comprising wheat, barley, maize, rice, sorghum, oats and their mixtures.

7. The bait according to one or more of the previous claims, **characterized in that** it comprises additional animal and/or vegetable fats.

8. The bait according to one or more of the previous claims, **characterized in that** it comprises a further inert baiting component in solid form suitable for being gnawed.

9. The bait according to one or more of the previous claims, **characterized in that** it comprises one or more aromatizing substances, additives, preservatives, softeners and bittering agents.

10. The bait according to one or more of the previous claims, **characterized in that** the baiting component in paste form is present in a quantity ranging from 40 to 80% by weight and the baiting component in solid form is present in a quantity ranging from 5 to 30% by weight.

11. The bait according to one or more of the previous claims, **characterized in that** said active principle is an acute rodenticide selected from the group comprising scilliroside, strychnine, crimidine, sodium fluoroacetate, fluoroacetamide, zinc phosphide, norbormide, thallium sulfate, α-chlorohydrin, antu and their mixtures.

12. The bait according to one or more of the previous claims, **characterized in that** said active principle is a chronic rodenticide with an anti-coagulating activity.

13. The bait according to claim 12, **characterized in that** said rodenticide is a multiple dose anti-coagulating substance selected from the group consisting of warfarin, coumacloro, coumatetralyl, coumafuril, difacinone, clorofacinone and their mixtures.

14. The bait according to claim 12, **characterized in that** said rodenticide is a single dose anti-coagulating substance selected from the group consisting of bromadiolone, difenacoum, brodifacoum difethalone, flocoumafen and their mixtures.

15. A process for preparing a combined bait with a rat-poisoning action which comprises mixing a rodenticidal active principle dispersed in a fluid carrier with a combined component in solid form to allow the absorption of said active principle on the part of said component in solid form, the addition of a baiting component in the form of paste or flour and mixing to obtain the uniform distribution of the rodenticidal active principles in the baiting components.

16. Use of a bait according to one or more of the previous claims 1-14 as a mouse- or rat-poison

17. The use according to claim 16 for the fight against a murine species selected from *Rattus norvegicus, Rattus rattus, Mus musculus, Apodemus sylvaticus.*

## Patentansprüche

1. Kombinierter Köder mit Ratten vergiftender Wirkung, der einen Wirkstoff mit rodentizider Wirkung und eine Köderzusammensetzung umfasst, **dadurch gekennzeichnet, dass** die Köderzusammensetzung einen für Nagetiere wohlschmeckenden Bestandteil in Pastenform, der Mehl pflanzlicher und/oder tierischer Herkunft umfasst, in Verbindung mit einem Bestandteil in fester Form, der geeignet ist, von einem Nagetier genagt zu werden, umfasst.

2. Köder gemäß Anspruch 1, **dadurch gekennzeichnet, dass** der Köderbestandteil in fester Form aus Getreide, Obst, Gemüse, Mehlaggregatcn, in Formen, die geeignet sind, von einem Nagetier genagt zu werden, ausgewählt ist.

3. Köder gemäß Anspruch 2, **dadurch gekennzeichnet, dass** das Obst oder Gemüse in Form von Stücken vorliegt, die geeignet sind, von Nagetieren genagt zu werden.

4. Köder gemäß Anspruch 2 oder 3, **dadurch gekennzeichnet, dass** das Obst aus getrockneten Äpfeln, getrockneten Birnen, getrockneten Feigen und deren Gemischen ausgewählt ist.

5. Köder gemäß Anspruch 2 oder 3, **dadurch gekennzeichnet, dass** das Gemüse aus Karotten, getrockneten Tomaten, Bohnen, Artischocken und deren Gemischen ausgewählt ist.

6. Köder gemäß Anspruch 2, **dadurch gekennzeichnet, dass** das Getreide aus Weizen, Gerste, Mais, Reis, Hirse, Hafer und deren Gemischen ausgewählt ist.

7. Köder gemäß einem oder mehrerer der vorstehenden Ansprüche, **dadurch gekennzeichnet, dass** er zusätzliche tierische und/oder pflanzliche Fette umfasst.

8. Köder gemäß einem oder mehrerer der vorstehenden Ansprüche, **dadurch gekennzeichnet, dass** er einen weiteren inerten Köderbestandteil in fester Form umfasst, der geeignet ist, zernagt zu werden.

9. Köder gemäß einem oder mehrerer der vorstehenden Ansprüche, **dadurch gekennzeichnet, dass** er eine oder mehrere aromatisierende Substanzen, Zusatzstoffe, Konservierungsmittel, Weichmacher und Bitterstoffe umfasst.

10. Köder gemäß einem oder mehrerer der vorstehenden Ansprüche, **dadurch gekennzeichnet, dass** der Köderbestandteil in Pastenform in einer Menge im Bereich von 40 bis 80 Gew.-% vorliegt und der Köderbestandteil in fester Form in einer Menge im Bereich von 5 bis 30 Gew.-% vorliegt.

11. Köder gemäß einem oder mehreren der vorstehenden Ansprüche, **dadurch gekennzeichnet, dass** der Wirkstoff ein akutes Rodentizid ist, das aus Scillirosid, Strychnin, Crimidin, Natriumfluoracetat, Fluoracetamid, Zinkphosphid, Norbormid, Thalliumsulfat, α-Chlorhydrin, Antu und deren Gemischen ausgewählt ist.

12. Köder gemäß einem oder mehrerer der vorstehenden Ansprüche, **dadurch gekennzeichnet, dass** der Wirkstoff ein chronisches Rodentizid mit einer antikoagulierenden Wirkung ist.

13. Köder gemäß Anspruch 12, **dadurch gekennzeichnet, dass** das Rodentizid ein Mehrfachdosis-Anticoagulans ist, das aus Warfarin, Cumachlor, Cumatetralyl, Cumafuryl, Diphacinon, Chlorphacinon und deren Gemischen ausgewählt ist.

14. Köder gemäß Anspruch 12, **dadurch gekennzeichnet, dass** das Rodentizid ein Einzeldosis-Anticoagulans ist, das aus Bromadiolon, Difenacoum, Brodifacoum, Difethialon, Flocoumafen und deren Gemischen ausgewählt ist.

15. Verfahren zur Herstellung eines kombinierten Köders mit Ratten vergiftender Wirkung, das Mischen eines in einem flüssigen Träger dispergierten, rodentiziden Wirkstoffs mit einem kombinierten Bestandteil in fester Form, um die Absorption des Wirkstoffs auf dem Teil aus dem Bestandteil in fester Form zu ermöglichen, die Zugabe eines Köderbestandteils in Pasten- oder Mehlform und Mischen, um diegleichförmige Verteilung der rodentiziden Wirkstoffe in den Köderkomponenten zu erreichen.

16. Verwendung eines Köders gemäß einem oder mehrerer der vorstehenden Ansprüche 1 bis 14 als Mäuse- oder Rattengift.

17. Verwendung gemäß Anspruch 16 zur Bekämpfung einer murinen Spezies, ausgewählt aus *Rattus norvegicus, Rattus rattus, Mus musculus, Apodemus sylvaticus.*

## Revendications

1. Appât combiné à action d'empoisonnement des rats comprenant un principe actif à action rodenticide et une composition d'appât, **caractérisé en ce que** ladite composition d'appât comprend un composant sous forme de pâte au goût agréable pour les rongeurs comprenant une farine d'origine végétale et/ou animale associé avec un composant sous une forme solide appropriée pour être rongée par un rongeur.

2. Appât selon la revendication 1 **caractérisé en ce que** ledit composant d'appât sous forme solide est choisi dans le groupe comprenant les céréales, les fruits, les légumes, les agrégats de farine, sous des formes appropriées pour être rongées par un rongeur.

3. Appât selon la revendication 2 **caractérisé en ce que** lesdits fruits ou légumes sont sous forme de fragments appropriés pour être rongés par des rongeurs.

4. Appât selon la revendication 2 ou 3 **caractérisé en ce que** lesdits fruits sont choisis dans le groupe comprenant les pommes séchées, les poires séchées, les figues séchées et leurs mélanges.

5. Appât selon la revendication 2 ou 3 **caractérisé en ce que** lesdits légumes sont choisis dans le groupe comprenant les carottes, les tomates séchées, les haricots, les artichauts et leurs mélanges.

6. Appât selon la revendication 2 **caractérisé en ce que** lesdites céréales sont choisies dans le groupe comprenant le blé, l'orge, le maïs, le riz, le sorgho, l'avoine et leurs mélanges.

7. Appât selon une ou plusieurs des revendications précédentes **caractérisé en ce qu'**il comprend des graisses animales et/ou végétales supplémentaires.

8. Appât selon une ou plusieurs des revendications précédentes **caractérisé en ce qu'**il comprend un composant d'appât inerte supplémentaire sous une forme solide appropriée pour être rongée.

9. Appât selon une ou plusieurs des revendications précédentes **caractérisé en ce qu'**il comprend une ou plusieurs substances aromatisantes, additifs, conservateurs, amollissants et agents d'amertume.

10. Appât selon une ou plusieurs des revendications précédentes **caractérisé en ce que** le composant d'appât sous forme de pâte est présent en une quantité allant de 40 à 80 % en poids et le composant d'appât sous forme solide est présent en une quantité allant de 5 à 30 % en poids.

11. Appât selon une ou plusieurs des revendications précédentes **caractérisé en ce que** ledit principe actif est un rodenticide aigu choisi dans le groupe comprenant le scilliroside, la strychnine, la crimidine, le fluoroacétate de sodium, le fluoroacétamide, le phosphure de zinc, le norbormide, le sulfate de thallium, l'α-chlorhydrine, l'antu et leurs mélanges.

12. Appât selon une ou plusieurs des revendications précédentes **caractérisé en ce que** ledit principe actif est un rodenticide chronique à activité anticoagulante.

13. Appât selon la revendication 12 **caractérisé en ce que** ledit rodenticide est une substance anticoagulante à doses multiples choisie dans le groupe consistant en la warfarine, le coumacloro, le coumatétralyl, le coumafuril, la difacinone, la clorofacinone et leurs mélanges.

14. Appât selon la revendication 12 **caractérisé en ce que** ledit rodenticide est une substance anticoagulante à dose unique choisie dans le groupe consistant en la bromadiolone, le difénacoum, la brodifacoum diféthalone, le flocoumafen et leurs mélanges.

15. Procédé pour préparer un appât combiné à action d'empoisonnement des rats qui comprend le mélange d'un principe actif rodenticide dispersé dans un support fluide avec un composant combiné sous forme solide pour permettre l'absorption dudit principe actif sur la partie dudit composant sous forme solide, l'addition d'un composant d'appât sous forme de pâte ou de farine et le mélange pour obtenir une distribution uniforme des principes actifs rodenticides dans les composants d'appât.

16. Utilisation d'un appât selon une ou plusieurs des revendications 1-14 précédentes comme poison pour les souris ou les rats.

17. Utilisation selon la revendication 16 pour la lutte contre une espèce murine choisie parmi *Rattus norvegicus, Rattus rattus, Mus musculus, Apodemus sylvaticus.*
